# EUROPEAN PATENT APPLICATION

(11) **EP 2 605 161 A1**
(43) Date of publication of application: **19.06.2013**
(21) Application number: 10842919.2
(22) Date of filing: 15.01.2010
(51) Int. Cl.: G06F 17/50, G06Q 10/00

(54) **METHOD FOR INTEGRALLY MANAGING AND CHECKING THE ARRANGEMENT OF ELEMENTS IN A DIGITAL INDUSTRIAL PLANT (E-PLANT) ON THE BASIS OF STEP USING SEMANTIC TECHNIQUES**

(71) Applicant: FUNDACION CENTRO DE TECNOLOGIAS DE INTERACCION VISUAL Y COMUNICACIONES VICOMTECH, 20009 San Sebastian (ES)
(72) Inventor: VAQUERO SAIZ, Javier, 20009 San Sebastian (ES); POSADA VELASQUEZ, Jorge Leon, 20009 San Sebastian (ES); TORO RODRIGUEZ, Carlos Andres, 20009 San Sebastian (ES); PALENZUELA, CORCHO, Carlos, 20009 San Sebastian (ES)
(74) Representative: Isern-Jara, Nuria
(86) International application number: PCT/ES2010/000009
(87) International publication number: WO 2011/086203

(57) **Abstract**

Method for integrally managing and checking the arrangement of elements in a digital industrial plant (e-plant) on the basis of STEP using semantic techniques, centred on the concept of an "e-plant", involving the compilation of all possible or necessary data for persistently maintaining a conceptual representation of an industrial plant with various aims such as introduction of a new product to be produced with the capacities of the current plant, redesign of the industrial plant for possible extension of the operational capacity of said plant, redesign of the industrial plant in order to reduce production costs, implementation of the work involved in maintaining the industrial plant, verification and possible simulation of the processes carried out inside the industrial plant and reconfiguration of the industrial plant at another location.

## Description

The invention relates to a method for integrally managing and checking the arrangement of elements in a digital industrial plant (e-plant) on the basis of the ISO 10303 protocol called STEP using semantic techniques, i.e. using ontologies on the basis of STEP, which allows the different elements that can be configured in a industrial plant to be represented from both a geometrical point of view as well as a conceptual level.

The conceptual representation via domain ontologies on the basis of STEP, allows different virtual engineering tools (VET) that are used at different stages of the product life cycle to retain and provide knowledge to the models that will be configured in the plant layout. This represents a marked improvement in the current management of industrial plants, as the invention preserves the semantic load (knowledge) of the elements involved in the plant design, and said knowledge could be used for both the design itself and for integrally managing the e-plant, regardless of the virtual engineering tools (VET) used throughout the different stages of the product life cycle.

As STEP is a standard dealing with geometry and related information, the invention also includes extensions to ontologies based on the standard.

The invention proposes a method to eliminate the loss of information between various VET, enabling integral management and checking of the elements of a digital industrial plant (e-plant) beyond its geometry.

Industrial plants currently use a number of methods implemented by software tools or applications, by which it is intended to manage operation of the plant and resolve the various problems that may arise; planning the layout of the machines in a production line, new product development, implementation cost and even the simulation of biometric factors.

Often, these methods, which were developed separately without the global vision of their implementation being taken into account, are not completely compatible with each other, losing information generated by a tool on moving it to another (either within the same life-cycle stage or to a later stage).

Industrial plants currently use a number of virtual engineering tools (VET) enabling the management and control of said plants, these tools address different information in each life cycle of the plant, the problem that arises is that the information each one of them manages cannot be used by the rest. This poses two problems: on the one hand, a tool does not have certain information and knowledge that could be useful if information could be obtained from other tools in the plant, on the other hand, no overview of all information processed by each one of the tools is available.

On the other hand, a big problem is that although there is some awareness by the elements of their function within the model of the plant (in a PDM model for example), said knowledge is lost on exporting the model from one programme to another, as only the geometries are guaranteed by the export process.

The problem is identified as how a system of representation from the perspective of knowledge engineering (semantics, ontologies, etc.), can maintain the process of design and verification of an industrial plant.

The proposed solution whereby the use of semantic tools, objects that are part of the design of an industrial plant also have knowledge of its geometry, information on proximity, use, economic and even physical variables. These properties will be obtained from different modules, programmes and data repositories in order to provide the model with the necessary characteristics, such that different plant layouts can be arranged. The different plant layouts can be visualized by means of a display of large models that contain the layouts, and where walkthrough experiences can be generated.

For patent WO 2005/098687 A1: "knowledge management system with interactive rule changes for computer aided design modeling", a system is known where rules are applied which the user interactively inserts or modifies. These rules are part of a Knowledge Management Base, where additional knowledge to the CAD model geometrics is obtained, and are applied to this three-dimensional model at runtime. Additional information to the CAD model geometrics is generated in the method according to the present invention. Nonetheless, the invention has nothing to do with the rule changes that are reflected on the geometrical models at runtime. The geometric models are only one part of the knowledge input that reaches the e-plant and are static models in the sense that the model does not change in real time. There are other inputs such as simulation of the processes, cost data, etc. which also contribute and can generate important knowledge related to the e-plant concept.

For patent EP 1 037 154 A2: "method for data conversion between three-dimensional cad data and data according to the international standardization organization standard, and apparatus using the same", a method for data conversion from CAD to ISO standards, and conversely, ISO standards to CAD is known. As explained above, the invention contains ontologies that are based on STEP (ISO standard) and other ontologies that extend STEP, since the standard contains information on geometry and other related information. It undoubtedly requires a CAD to STEP model data conversion, although the invention does not centre on it, since there must also be conversions between data obtained from tools, for example, finite-state analysis, or maintenance that is not recorded in STEP.

For patent EP 1 672 549 A1: "product edition and simulation database system with user interaction graphical tool", a method for editing a product and its simulation, and is provided with a graphical user interface for this purpose is known. This method, based on CATIA, only takes into account the geometric information of the models to carry out their simulations. In contrast, other relevant knowledge in respect of setting up an industrial plant is not taken into account. For example, with the known method according to this patent, the movement of 50 robots can be simulated to see whether they collide or not with each other, but cannot be achieved if the plant has sufficient energy to connect the 50 robots at a time. Nonetheless, this kind of knowledge can be considered with the invention as the concept is based on ontologies. The power of these tools can be used to make inferences that would not be possible from information databases.

For the patent GB 2 415 520 A: "hierarchical 3D data system", a method for displaying information related to a 3D model of the same model is known, thereby avoiding having to open additional software tools to view it. To that end, a hierarchy of 3D nodes is created to which related information is added. However in the invention, the 3D model is not the basis of the elements of the hierarchy, but one more input, where the node revolves around the 3D model.

For patent EP 1 939 772 A1: "method and a computer program product for computer aided design of a product comprising a set of constrained objects", about the constraints between geometric objects. To calculate them, sets of rules are used. The invention also takes into account the geometric constraints between different objects, but it is the ontology itself that acts as the set of rules, being calculated when necessary, for example during a graphic representation of the plant (which puts us in the application layer).

For patent US 2008/0181516 A1: "dynamic information systems", a meta system to create dynamic information systems is known, using different tools such as ontologies, not considering that this has sufficient relevance, since the claimed objective is completely different from that of the invention.

For patent WO 03/069442 A2: "method and apparatus for frame-based knowledge representation in the unified modelling language (UML)", a method to emulate the knowledge representation in a UML environment is known.

While referring to ontologies, for example, it is for processing to UML schemas, so it is considered unrelated to the proposal of the invention.

The invention relates to a method for integrally managing and checking the arrangement of elements in digital industrial plant (e-plant) allowing dual representation of the knowledge provided by a digital graphic representation and at conceptual level of the different elements that can be configured in an industrial plant (plant layout).

The conceptual representation through domain ontologies based on the ISO 10303 (STEP) protocol, allows various virtual engineering tools (VET) that are used at different stages of the product life cycle to preserve and provide knowledge to the models that will be configured in the plant layout.

The invention preserves the semantic load (knowledge) of the elements involved in the layout, and being able to take advantage of said knowledge both for the actual layout and overall management of the e-plant, independently of the virtual engineering tools (VET) used in the different stages of the product life cycle. The graphical representation is, therefore, one of the possible system outputs, by providing the means to store any kind of knowledge originating even from the design elements of the layout.

As STEP is a standard dealing with geometry and related information, the invention also includes extensions to ontologies based on the standard.

The e-plant is a conceptual plant where the 3D model is an important, but not essential, part and cases can occur where there are elements of the e-plant that do not have any geometric model.

The details and advantageous characteristics of the invention are described with reference to the accompanying figures which show:
Figure 1.- Stages of product life cycle.
Figure 2.- Flow of information in the product life cycle in the current state.
Figure 3.- Flow of information in the product life cycle with the invention method.
Figure 4.- Detail on loss of information between stages.
Figure 5.- Details of conservation of information between stages.
Figure 6.- Outline of the method.
Figure 7.- Architecture proposed by the method.
Figure 8.- Example of application of the method.

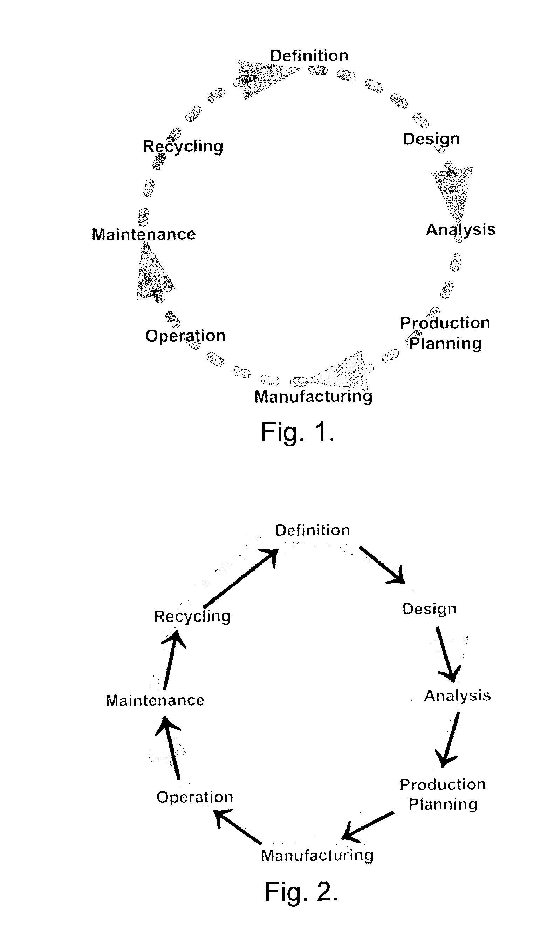

Figure 1 shows the product life cycle, which consists of several well differentiated stages. Today there are many virtual engineering tools that help to achieve the objectives of each of these stages. Often, these tools are not fully compatible with each other, losing information generated by a tool on moving it to another (either within the same life cycle stage or a later stage).

This loss of information results in the graphical visualization of industrial plants consisting of the geometric representation thereof, without the system having the knowledge about what it is representing (the notion of a tube will not exist for the system, for example, but rather a cylinder that goes from point A to point B, i.e., the physical characteristics thereof, for example, the type of material, mechanical strength, etc.).

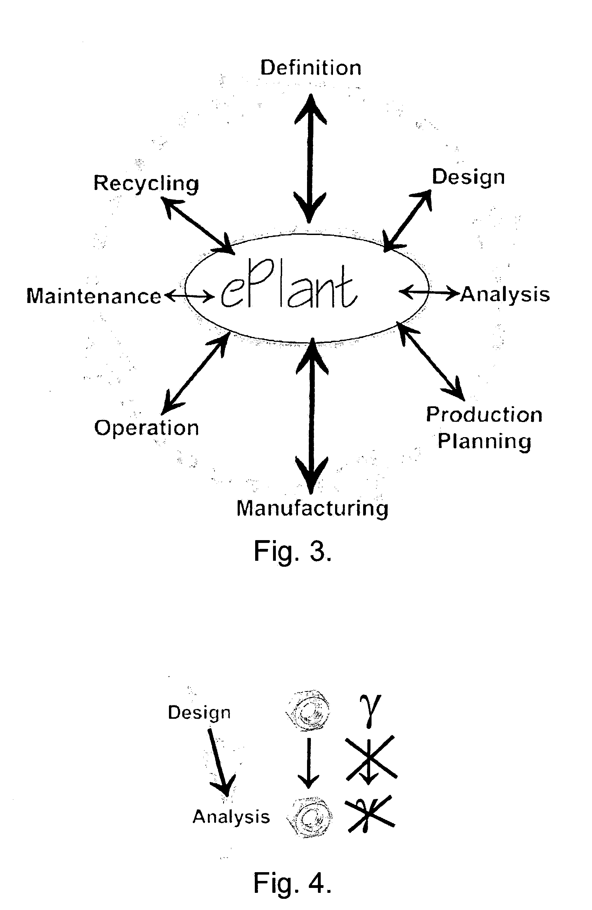

This invention proposes a system that implements a method that eliminates the loss of information between various VET, enabling the integral management and checking of the elements of a digital industrial plant (e-plant) beyond its geometry. The method implemented within the system proposes a change in the flow of information generated at the various stages throughout the product life cycle. Currently, the flow is directly between a stage i and the i +1 stage, as shown in Figure 2. It is easily seen in this model that a loss of information in a stage j of the process is carried through until the end thereof. Figure 4 shows an example in which, at the design stage, a three dimensional model of a nut and information associated with this force (y) is created.

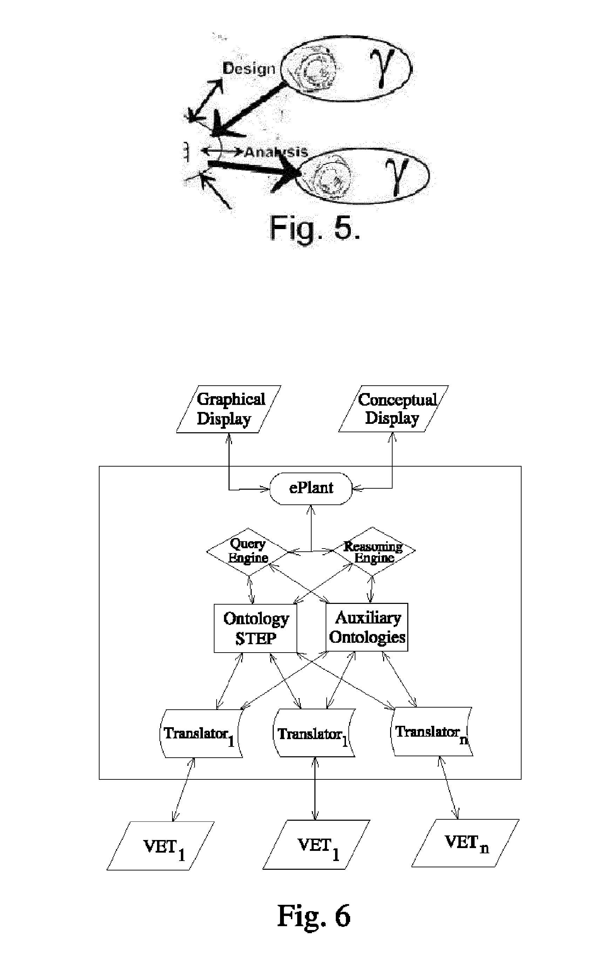

On moving to the Analysis Phase, based on current methods, the information of the three-dimensional model is transferred correctly, but information related to the force is lost en route, unable to be subsequently retrieved. The invention, however, uses the model presented in Figure 3, in which the information generated in a stage i is stored in an e-plant structure, from where it is recoverable at any later stage in the life cycle of the product. Figure 5 shows the same example presented above, and in this case both geometrical information as well as information related to the force generated during the design phase are stored in the e-plant, being subsequently recovered in either phase.

The method is based on:
- A number of translators who can capture the information generated by each of the VETs used in the product life cycle phases. These translators read the contents generated by the VETs (in their respective formats), and are adapted to the concepts contained in the various ontologies of the system.
- A domain ontology, which models the ISO 10303 protocol, better known as STEP.
- A set of ontologies, which allow STEP to be extended such that additional information to the geometrics can be managed.
- A search engine that allows queries on the set of ontologies.
- A reasoning engine, to infer information related to the elements contained in the set of ontologies.
- The e-plant contains all the information related to the already detailed industrial plant, and that connect the various user applications, such as a graphic display of the industrial plant, or a conceptual viewer of the elements of said plant.

The invention centres on the concept of an e-plant which is how the compilation of all possible or necessary data for persistently maintaining a conceptual representation of an industrial plant with various aims will be known.

By means of the invention proposed, an ontology-based knowledge engineering model would be arranged that would feed off the information that each engineering tool would produce such that the production process would be improved considerably.

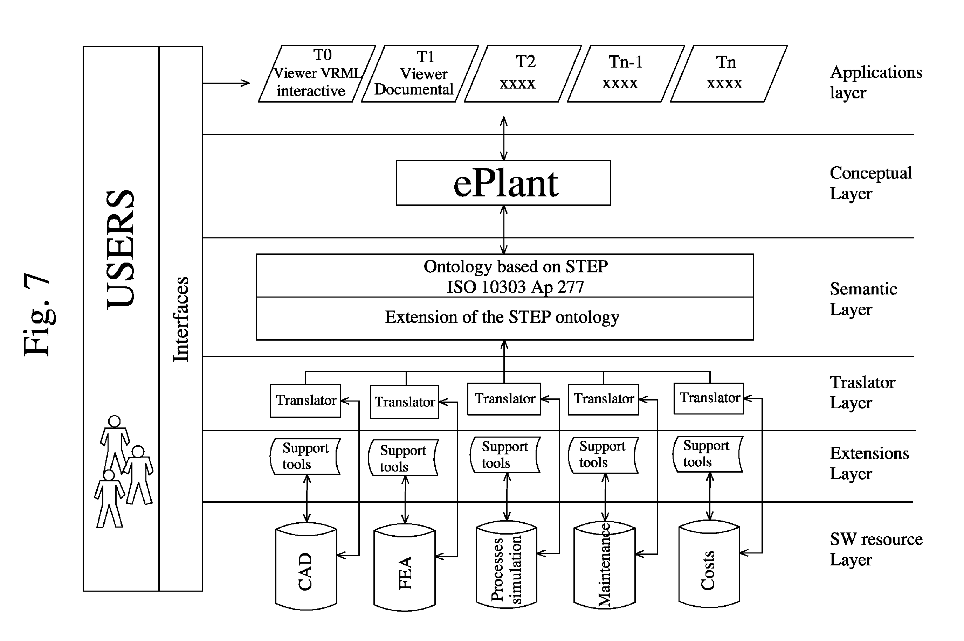

In order to implement the functional representation of an e-plant from the viewpoint of knowledge engineering, the architecture shown in Figure 7 is proposed.

The e-plant is divided into distinct layers. In the first instance there is a resource layer of software that is nothing more than the various computer systems the industrial plant level is arranged with in terms of software or even data. Each of the systems mentioned have various forms of intercommunication, such as an API (application programming interface) or via files.

What is known as the Extensions Layer is at the next level, which is a collection of tools that can exist or can be developed to improve each of the packages that the industrial plant has in terms of functionality.

It should be noted that it may well be the case that for certain applications, it may not be possible to develop applications/extensions as the API or script language may not be available or there is simply no need to extend the programme, in which case, there are no support tools available.

Concomitantly, there is a connection to the next layer (if this is needed for each available element) that relates this layer to the next which has been called the translation layer, said layer being responsible for translating or preparing the output data of each one of the software resources available, for them to be compatible with the data model in the semantic layer, in which two ontologies that will drive e-plant management are distinguished.

The invention centres on the concept of an e-plant which is how the compilation of all possible or necessary data for persistently maintaining a conceptual representation of an industrial plant with various aims will be known, preferably:
- Introduction of a new product to be produced with the capacities of the current plant.
- Redesign of the industrial plant for possible extension of the operational capacity of said plant.
- Redesign of the industrial plant in order to reduce production costs.
- Implementation of the work involved in maintaining the industrial plant.
- Verification and possible simulation of the processes carried out inside the industrial plant.
- Reconfiguration of the industrial plant at another location.

It is clear that in the operation of a modern industrial plant there are various tools called Virtual Engineering Applications (VEA) that can create the 3D model of the plant, simulate processes, calculate production costs, etc. What usually happens is that every package has characteristics that either due to requirements of the manufacturer of the package or by being focused on general functionalities, make it difficult to get an overview of the information that each of them could contribute towards the purposes that have been previously described. It is in this environment or dealing with this issue where the concept of the e-plant has functional validity, because if a knowledge engineering model is arranged, there may be different software tools supporting it and do not necessarily have to have translators among them.

For example, a model can be started in CAD, calculating the forces in software and then a production planning method for calculating costs can be used.

By means of the invention, an ontology-based knowledge engineering model would be arranged that would feed off the information that each engineering tool would produce such that the production process would be improved considerably.

In order to implement the functional representation of an e-plant from the viewpoint of knowledge engineering, the architecture shown in Figure 7 is proposed, where the e-plant is divided into various clearly defined layers. In the first instance there is a resource layer of software that is nothing more than the various computer systems the industrial plant level is arranged with in terms of software or even (VEA) data. Each of the systems mentioned have various forms of intercommunication, such as an API (application programming interface) or via files. What is known as the Extensions Layer is at the next level, which is a collection of tools that can exist or can be developed to improve each of the packages that the company has in terms of functionality.

It should be noted that it may well be the case that for certain software, applications/extensions might not be able to be developed as the API or script language may not be available or there is simply no need to extend the programme, in which case, there are no support tools available. Concomitantly, there is a connection to the next layer (if this is needed for each available element) that relates this layer to the next which has been called the translation layer, said layer being responsible for translating or preparing the output data of each one of the software resources available, for them to be compatible with the data model in the semantic layer, in which two ontologies that will drive e-plant management are distinguished.

Of these ontologies, it is proposed that in the case of the domain ontology based on STEP, specifically in the protocol for industrial plants (AP227) and the other will be an ontology extension, since the experience some members of the ePlantVerify consortium have had with said protocol, it is known that in certain locations the STEP protocol tends to be very geometric, while others may seem to be very functional and it is clear that there will be elements that are interesting for the e-plant that STEP, given its nature, has not considered and that in any case they will be treated, as much as possible, as standard and of course duly documented.

Once the semantic layer carries out the management task, it arranges the conceptual layer that contains the functional, geometric representation and in terms of information that is nothing more than the e-plant. However, the e-plant requires elements with which a user can interact, which is why an application layer is planned among which there is a distinction between at least two to be implemented, namely:
- VRLM Viewer:
   This application navigates the e-plant model and when any element is selected, the information obtained from the lower layers of the architecture is arranged, for example, if a 90 °angle is selected, information pertaining thereto could be obtained from different viewpoints that will be those provided by the applications that consider said elbow as an element in question. This is a typical semantic-based tool since the same element depending on the context of use provides different information to the user. Things like the user profile and their characteristics could be considered for the e-plant browser.
- Document Viewer:
   When referring to an e-plant, information from the e-plant may be obtained from an interface that is not necessarily in 3D, but simply may be a management application in which a user can manually launch questions to the e-plant, getting answers therefrom, as if to check the characteristics that have been stored by the semantic engine the e-plant models. It is clear that for each software component used to feed information to the e-plant, there must be a counterpart in the translation layer that must be considered independently because some programmes may not have an API available in which case the translation (data collection) should be collected through files.

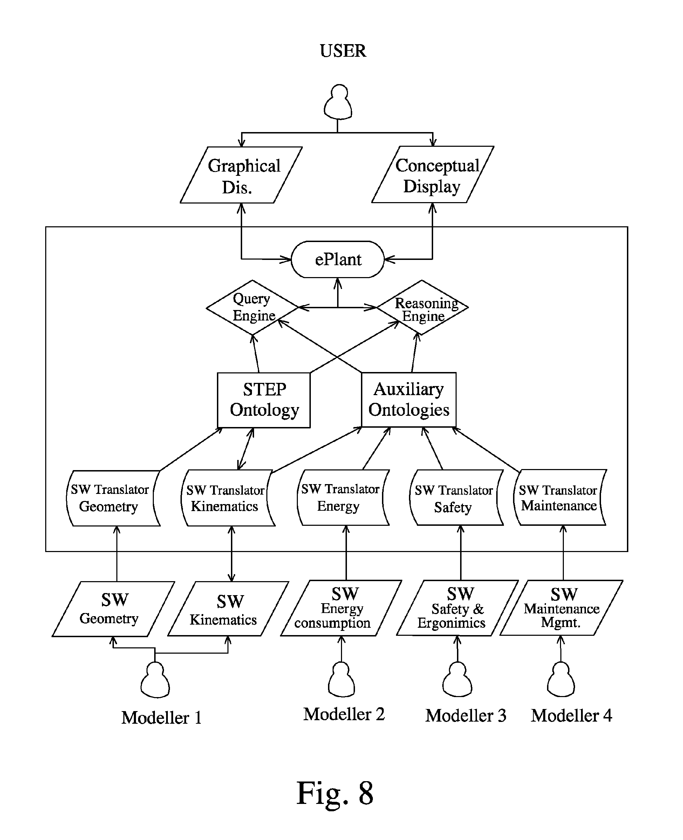

By way of example, the following case is shown graphically in Figure 8; a user models a manufacturing cell with CAD software that is available. This model is added to the e-plant, using the corresponding translator and forwarding that information to the STEP ontology. The user then provides the model with kinematics, for which a different software tool is used, which is not compatible with the native models of the software which the geometry was modelled with.

To this end, the e-plant provides the previously designed geometric model of the cell, using the corresponding kinematics SW translator to adapt this model to the specific tool to be used. When the model is provided with the corresponding kinematics, it is supplied to the e-plant, in this case forwarding the information to both the STEP ontology and the set of auxiliary or extension ontologies.

Meanwhile, different users use tools to calculate the energy consumption of the cell being modelled and their areas of safety and ergonomics, and how maintenance is managed. Each of these users, reports the information generated to the e-plant using the relevant translators, through the set of auxiliary ontologies.

Thus, all the useful information related to the modelled manufacturing cell is provided. Let us assume that another user considers the option of adding that manufacturing cell to the industrial plant that is being designed. In order to do this, there are tools based on the e-plant. In this example, the user has:
- a conceptual display, through which the latter can query if the plant has sufficient energy and space to add that new cell. This question reaches the level where the Query Engine and the Reasoning Engine are, which use the information from the ontologies to give the right answer to that question.
- a graphic display, through which the new manufacturing cell can be located at the chosen site for plant layout.

This location raises questions to the Query and Reasoning Engines level, querying the space, if it meets the safe area requirements, etc. If, for example, there were insufficient space to maintain the recommended safe area, the system forwards a response to the graphic display (so that, for example, the location is not permitted, or the user is notified that the location does not meet the safety requirements).

## Claims

1. A method for integrally managing and checking the arrangement of elements in a digital industrial plant (e-plant) on the basis of STEP using semantic techniques, centred on the concept of an e-plant, involving the compilation of all possible or necessary data for persistently maintaining a conceptual representation of an industrial plant with various aims, preferably:
- Introduction of a new product to be produced with the capabilities of the current plant.
- Redesign of the industrial plant for possible extension of the operational capacity of said plant.
- Redesign of the industrial plant in order to reduce production costs. Implementation of the work involved in maintaining the industrial plant.
- Verification and possible simulation of the processes carried out inside the industrial plant.
- Reconfiguration of the industrial plant at another location.

2. A method according to claim 1, wherein a domain ontology is used, which models the ISO 10303 protocol, better known as STEP.

3. A method according to claim 1, wherein a set of ontologies is used, which allows STEP to be extended such that additional information to the geometrics can be managed.

4. A method according to claim 1, wherein the integrated management and plant layout is arranged independently of the software tools used for creating the constituent elements.

5. A method according to claim 1, wherein a number of translators are used, allowing information gathered to be generated by each of the VET used in the phases of the product life cycle.

6. A method according to claim 1, wherein the translators, according to claim 5, read the contents generated by the VET (in their respective formats), and are adapted to the concepts contained in the various ontologies of the system.

7. A method according to claim 1, wherein a search engine is arranged that allows queries to be made on the set of ontologies.

8. A method according to claim 1, wherein a reasoning engine is arranged to infer information related to the elements contained in the set of ontologies.

9. A method according to claim 1, wherein a conceptual model is generated that contains all the information on the already detailed industrial plant (not graphically) i.e. in a dual representation called an e-plant.

10. A method according to claim 1, wherein the connectivity method is enabled to and from the various user applications by the e-plant described in claim 9.
